# EUROPEAN PATENT SPECIFICATION

(11) **EP 2 928 250 B1**
(45) Date of publication and mention of the grant of the patent: **20.09.2017**
(21) Application number: 14198273.6
(22) Date of filing: 16.12.2014
(51) Int. Cl.: H04W 16/10

(54) **Wireless communication system**
Drahtloses Kommunikationssystem
Système de communication sans fil

(30) Priority: 31.03.2014 JP 2014070837
(43) Date of publication of application: 07.10.2015
(73) Proprietor: Hitachi, Ltd., Chiyoda-ku Tokyo 100-8280 (JP)
(72) Inventor: Ookura, Yoshinori, Chiyoda-ku, Tokyo 100-8280 (JP); Yamasaki, Ryota, Chiyoda-ku, Tokyo 100-8280 (JP); Sakai, Kenichi, Chiyoda-ku, Tokyo 100-8280 (JP)
(74) Representative: Moore, Graeme Patrick

(56) References cited:
- US-A1- 2006 013 172
- US-A1- 2011 222 460
- US-A1- 2012 320 875

## Description

### BACKGROUND OF THE INVENTION

### 1. Field of the Invention

The present invention relates to a wireless communication system, and particularly to a wireless communication system which communicates between a plurality of master stations and a plurality of slave stations.

### 2. Description of the Related Art

US 2011/222460 A1 synchronisation method between base stations, radio communication system and base station thereof

US 2006/013172 A1 rssi threshold selection for channel measurements based on rssi of the received packets

JP-11(1999)-177531-A has been known as the background art of the present technical field. In this publication, there has been described a wireless communication system in which when an interference radio wave against a frequency hopping spread spectrum communication is detected within any one of wireless zones, a hopping pattern used in each of a master wireless station and a slave wireless station in the wireless zone is changed to a first hopping pattern for communication failure countermeasures, which used only each frequency in a frequency band in which the interference radio wave is avoidable, and a hopping pattern used in each of a master wireless station and a slave wireless station in another wireless zone adjacent to the above wireless zone is changed to a second hopping pattern for communication failure countermeasures, which uses each frequency in a band other than the frequency band of the frequencies used in the first hopping pattern for communication failure countermeasures.

### SUMMARY OF THE INVENTION

The technology described in JP-11(1999)-177531-A has a problem in that the hopping pattern for the communication failure countermeasures needs to be determined in advance for every radio wave interference assumed. Further, each adjacent wireless station as well as wireless stations subjected directly to the radio wave interference also needs to be changed to the second hopping pattern for the communication failure countermeasures to avoid the radio wave interference from taking place between wireless stations.

There is however a possibility that the adjacent stations having no influence of the radio wave interference in the current hopping pattern will also undergo radio wave interference newly due to the changed hopping pattern. When the adjacent station newly subjected to the radio wave interference makes a further change of the hopping pattern to avoid the radio wave interference, an adjacent station next to the adjacent station also needs to change the hopping pattern.

That is, a problem arises in that the influence of a hopping pattern change of one wireless station will be exerted on other plural wireless stations, so that a hopping pattern changing process for avoiding the radio wave interference is in danger of no converging.

Therefore, the present invention aims to provide a wireless communication system which reduces the influence of both radio wave interference from an adjacent wireless station in its own wireless communication system and radio wave interference from a wireless station of another wireless communication system and is high in operation rate.

Accordingly, the present invention provides a wireless communication system as set forth in claim 1.

According to the present invention, a wireless communication system can be provided which reduces the influence of both radio wave interference from an adjacent master wireless station in its own wireless communication system and radio wave interference from a wireless station of another wireless communication system and is high in operation rate.

### BRIEF DESCRIPTION OF DRAWINGS

These and other features, objects and advantages of the present invention will become more apparent from the following description when taken in conjunction with the accompanying drawings wherein:
FIG. 1 is a diagram showing an operation of a wireless communication system according to a first embodiment of the present invention;
FIG. 2 is a diagram illustrating a configuration of the wireless communication system according to the first embodiment of the present invention;
FIG. 3 is a diagram depicting a configuration of the wireless communication system according to the first embodiment of the present invention;
FIG. 4 is a diagram showing a configuration of the wireless communication system according to the first embodiment of the present invention;
FIG. 5 is a diagram illustrating wireless channels of the wireless communication system according to the first embodiment of the present invention;
FIG. 6 is a diagram depicting an operation of the wireless communication system according to the first embodiment of the present invention;
FIG. 7 is a diagram showing an operation of the wireless communication system according to the first embodiment of the present invention;
FIG. 8 is a diagram illustrating an operation of the wireless communication system according to the first embodiment of the present invention;
FIG. 9 is a diagram illustrating an operation of the wireless communication system according to the first embodiment of the present invention;
FIG. 10 is a diagram depicting wireless channels of the wireless communication system according to the first embodiment of the present invention;
FIG. 11 is a diagram showing an operation of the wireless communication system according to the first embodiment of the present invention;
FIG. 12 is a diagram illustrating an operation of the wireless communication system according to the first embodiment of the present invention;
FIG. 13 is a diagram showing an operation of the wireless communication system according to the first embodiment of the present invention;
FIG. 14 is a diagram illustrating an operation of the wireless communication system according to the first embodiment of the present invention;
FIG. 15 is a diagram showing wireless channels of the wireless communication system according to the first embodiment of the present invention;
FIG. 16 is a diagram illustrating wireless channels of the wireless communication system according to the first embodiment of the present invention;
FIG. 17 is a diagram depicting wireless channels of the wireless communication system according to the first embodiment of the present invention;
FIG. 18 is a diagram showing wireless channels of the wireless communication system according to the first embodiment of the present invention; and
FIG. 19 is a diagram illustrating wireless channels of the wireless communication system according to the first embodiment of the present invention.

### DESCRIPTION OF THE PREFERRED EMBODIMENTS

Preferred embodiments will hereinafter be described using the accompanying drawings.

### (First embodiment)

A first embodiment will be described.

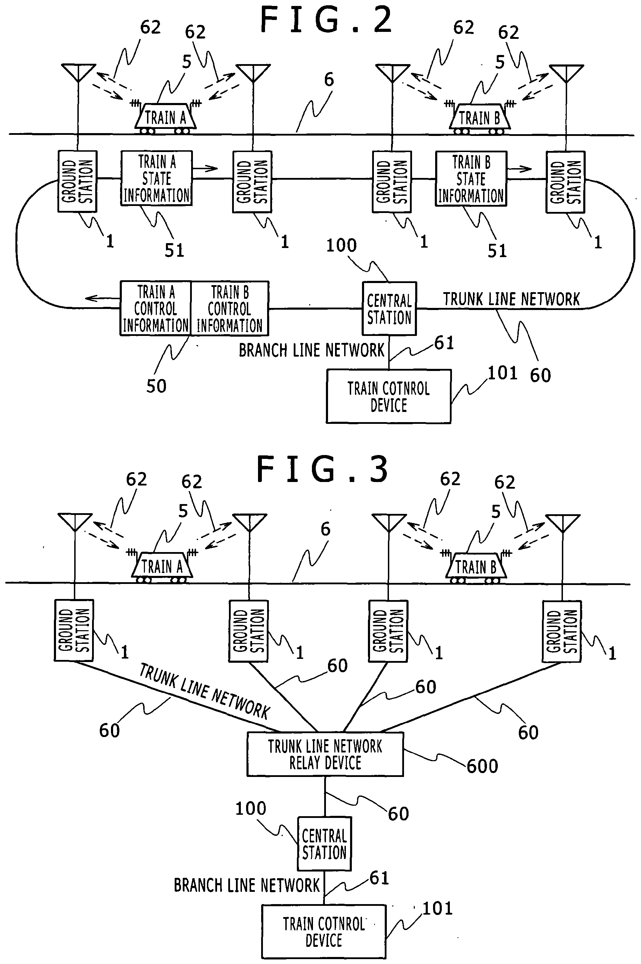

First, a configuration example of a wireless communication system according to the first embodiment is shown in FIG. 2. The wireless communication system in FIG. 2 is a wireless communication system which includes ground stations as master stations and mobiles like trains as slave stations and is applied to a wireless control system which controls the mobiles by radio. A central station 100 and a plurality of ground stations 1 are connected to a trunk line network 60. A train control device 101 is connected to the central station 100 through a branch line network 61. The respective ground stations 1 are installed along a travel route 6 of trains 5 and communicate with a plurality of the trains 5 running on the travel route 6 through wireless networks 62.

Incidentally, the trunk line network 60 and the branch line network 61 may be multiplexed in transmission line to enhance the reliability of each network. Further, the central station 100 and the train control device 101 may be of a type that the same device has mutual functions.

The trains 5 periodically generate train state information 51 indicative of their own running positions and speeds, operating states of their own on-train devices, etc., search the ground stations 1 communicable therewith through the wireless networks 62, and if the ground stations 1 communicable therewith are found, transmits the train state information to the wireless networks 62. Each ground station 1 having received the train state information 51 from the wireless network 62 transmits the train state information 51 to the central station 100 through the trunk line network 60. The central station 100 transmits the train state information 51 received from the trunk line network 60 to the train control device 101 through the branch line network 61.

The train control device 101 periodically generates train control information 50 indicative of a stop position and running speed of each train 5, control information relative to the on-train device, etc. with respect to each train 5 on the basis of the train state information 51 sent from each train 5 and transmits the same to the central station 100 through the branch line network 61. The central station 100 having received the train control information 50 from the branch line network 61 transmits the train control information 50 to all ground stations 1 or a specific ground station 1 through the trunk line network 60.

Incidentally, the train control information 50 relative to the respective trains 5 may be transmitted by gathering the train control information corresponding to all the trains into one, or the train control information 50 corresponding to the respective trains may be transmitted separately. In the present embodiment, the train control information 50 will be described with the train control information corresponding to all the trains being gathered into one.

The ground station 1 having received the train control information 50 therein transmits the train control information 50 to the wireless network 62. The train 5 having received the train control information 50 from the wireless network 62 controls itself in accordance with the contents of the train control information 50.

Incidentally, as the wireless network 62, a wireless local area network specified in, for example, an IEEE802.11 standard or IEEE802.15 standard or the like may be used, or AP and STA of the wireless communication system described in the embodiment 1 of JP-11(1999)-177531-A may be used.

Further, as the trunk line network 60 and the branch line network 61, a wired network specified in, for example, an IEEE802. 3 standard, an IEEE802. 17 standard or the like may be used even for both networks. Alternatively, a wireless local area network similar to the wireless network 62, a railway-dedicated wireless communication network and a wireless public network may be used.

Although there is shown, in FIG. 2 described above, the configuration in which the central station 100 and the respective ground stations 1 are connected by the ringshaped trunk line network 60, they may be connected by a star-shaped trunk line network 60. A trunk line network relay device 600 in FIG. 3 is a relay device such as a repeater hub, a switching hub, a router or the like.

Incidentally, as the shape of the trunk line network 60, a bus topology and a daisy chain topology are also possible even in addition to FIG. 2 and FIG. 3. Since, however, any topology does not affect the operation of each ground station 1 according to the present invention, the description thereof will be omitted.

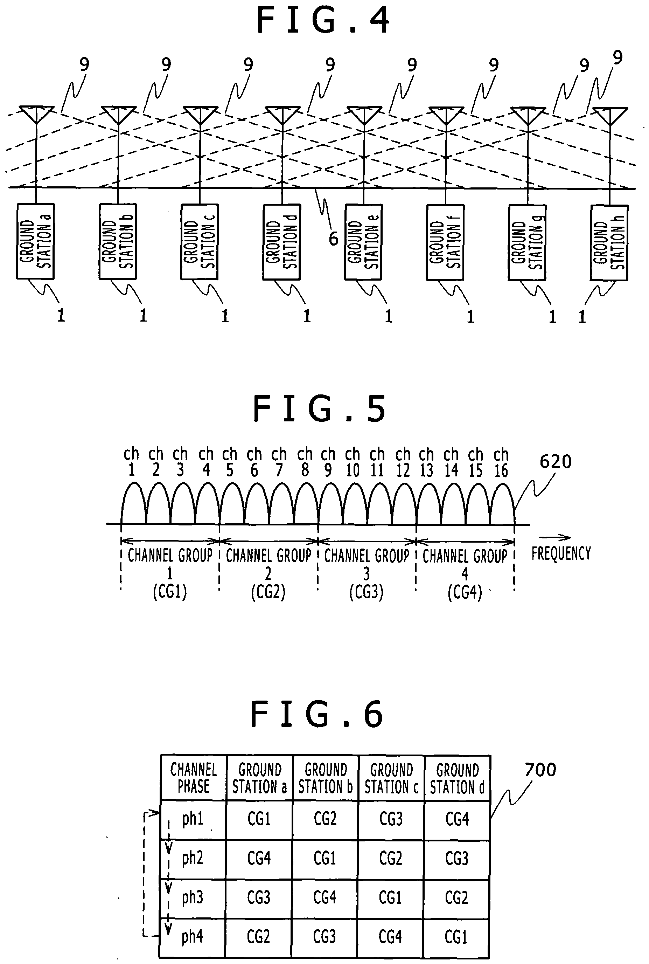

An example of an arrangement of each ground station 1 will next be described using FIG. 4.

Incidentally, in the present invention, the range of a location where one ground station is communicable with a mobile such as a train is referred to as a "cell" of the ground station below. Further, the description of the train control device 101, the central station 100, the trunk line network 60, the branch line network 61, the wireless networks 62, etc. is omitted in FIG. 4 for simplification of the drawing.

As shown in FIG. 4, a plurality of the ground stations 1 are arranged along the travel route 6 of the trains 5. At this time, the location of each ground station 1 is determined in such a manner that the train 5 is communicable with the two or more ground stations 1 at an arbitrary position on the travel route 6. That is, the location of each ground station 1 is determined in such a manner that the two or more cells 9 overlap at the arbitrary position on the travel route 6. For instance, in the example of FIG. 4, the cell 9 of the ground station d has a left end that reaches up to around the ground station a being an adjacent station on its left side, and a right end that reaches up to around the ground station g being an adjacent station on its right side. The four cells 9 of the ground stations d, c, b and a overlap in a region between the ground stations d and c on the travel route 6, and the four cells 9 of the ground stations d, e, f and g overlap between the ground stations d and e on the travel route 6. Assume that other ground stations 1 are also arranged in like manner such that their adjacent stations and cells 9 overlap. Thus, when the respective ground stations 1 transmit radio waves in the state in which the cells overlap, there is a possibility that the radio waves will interfere with each other between the ground stations.

Therefore, a method of preventing radio wave interference by dividing radio frequencies (hereinafter called channels) available in each ground station 1 into groups (channels divided into groups will hereinafter be called channel groups) and using the channels belonging to the channel groups different from each other between the ground stations where the cells overlap will be described below.

Each channel group is determined to have a plurality of channels different from each other. An example illustrative of each channel group is shown in FIG. 5.

FIG. 5 illustrates the example in which assuming that the number of channels usable in the ground station 1 is sixteen channels and the four cells overlap on the travel route at maximum, the sixteen channels are divided into four channel groups CG1, CG2, CG3 and CG4 by four channels. CG1 is composed of ch1 to ch4, CG2 is composed of ch5 to ch8, CG3 is composed of ch9 to ch12, and CG4 is composed of ch13 to ch16.

Next, each ground station 1 in which the cells overlap determines the different channel groups so as to simultaneously use them. An example of the channel groups used in the ground stations a, b, c and d in which the cells overlap is illustrated in FIG. 6. By simultaneously using the channels of the channel groups different between the ground stations 1 as shown in FIG. 6, the radio wave interference is prevented from taking place between the ground stations in which the cells overlap.

Next, the channel group used by each ground station 1 is changed every constant time. This is done to reduce the influence of temporary radio wave interference received from another wireless system. Even if the radio wave interference is suffered at the channel in use, the radio wave interference can be avoided by changing the channel to that of another channel group after a fixed time. Needless to say, even after the change, the channel groups different between the respective ground stations 1 are used.

Here, a period during which the ground stations 1 respectively continue to use one channel group is referred to as a "channel phase" in the present invention. The channel phase is assumed to change every constant time. In the example of FIG. 6, the channel phase is given as four phases of ph1 to ph4, which are circulated in order.

That is, during ph1, the ground stations a, b, c and d respectively use CG1, CG2, CG3 and CG4. During ph2, the ground stations a, b, c and d respectively use CG4, CG1, CG2 and CG3. Subsequently, ph3 and ph4 are also as shown in FIG. 6 in like manner.

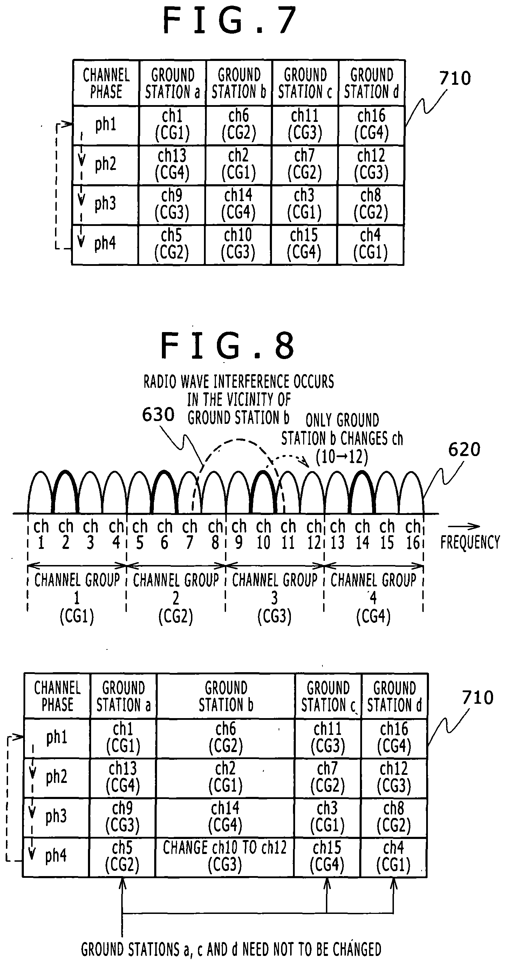

Last, the channels used by the respective ground stations 1 are determined in the respecting channel phases. An example in which the channels used in FIG. 6 have been determined is illustrated in FIG. 7. Incidentally, the channels to be determined are not limited to FIG. 7. It is apparent that even if any channel is selected if it is within the same channel group, it does not interfere with other ground stations 1.

Thus, it is possible to prevent radio wave interference from taking place between the ground stations 1 by using the channel groups different between the ground stations 1 in the period of the same channel phase, and avoid or reduce the influence of temporary radio wave interference from another wireless system by changing the channel phases in synchronism between the ground stations 1.

Here, when a wireless station (e.g., a wireless LAN base station or the like) of another wireless system is installed in the neighborhood of one ground station 1, and radio waves are continuously transmitted from the wireless station, there is a possibility that radio wave interference is continuously suffered unlike the above-described "temporary radio wave interference from another wireless system".

For example, consider where as shown in FIG. 8, the wireless station of another wireless system is set in the neighborhood of the ground station b and radio wave interference occurs in the vicinity of ch7 to ch11 by radio waves. Further, assume that the ground stations 1 are at a distance from each other and the radio wave interference remains locally in the vicinity of the ground station b and does not influence other ground stations.

At this time, the ground station b undergoes radio wave interference from which ch10 of CG3 suffers at the timing of the channel phase ph4. Since the ground station is shifted to another channel phase after a predetermined time, the influence of the radio wave interference can be avoided temporarily, but it is inevitably subjected to the radio wave interference in the case of the channel phase ph4 with the situation as it is.

Therefore, when a deterioration in the quality of communication between the train 5 and the ground station b exceeds a threshold value, the ground station b changes the channel to another channel in CG3, e.g., ch12 in FIG. 8. Since other ground stations a, c and d do not use CG3 in the channel phase ph4, the ground station b is capable of performing a channel change within CG3 without the need to take into consideration the interference of radio waves to the channels used in other ground stations. After this channel change, the ground station b is able to avoid or reduce the influence of the radio wave interference without depending on each channel phase.

Incidentally, as an example of the communication quality, there are mentioned a received packet error rate, a bit error rate, a power ratio of a desired signal to an interference signal, the lost number of packets per unit time, the received number of effective packets per unit time, an effective packet average reception interval, etc. Of these, at least one may be adopted. The communication quality may be monitored by a wireless transmitting/receiving means that the ground station 1 or the train 5 has. The lost number of packets per unit time, the received number of effective packets per unit time, the effective packet average reception interval, etc. can be monitored even by a transmitting/receiving means of the trunk line network 60 of the central station 100. As an example of its monitoring, change criteria such as changing each channel in which the packet error rate exceeds a fixed number (e.g., 10⁻¹) while continuing for a fixed period (e.g., 10 minutes) or more in the ground station 1, the train 5 or the like, or changing each channel in which the lost number of packets per unit time exceeds a fixed number (e.g., 100) while continuing for a fixed period (e.g., 10 minutes) in the ground station 1, the train 5, the central station 100 or the like may be determined.

Further, the monitoring of the communication quality may regularly be conducted by a maintenance person in an installation place of each ground station 1. In this case, when the maintenance person detects the ground station 1 in which the deterioration in communication quality exceeds the threshold value, the maintenance person performs the operation of changing/switching the use channel with respect to the ground station 1.

As a determination criterion for determining the channel to be changed, there are considered methods such as storing the past histories of changes in channel in each ground station 1 or the central station 100 and lowering the priority order of selecting each channel deteriorated in communication quality in the past, and selecting each channel not used in the past on a priority basis, etc.

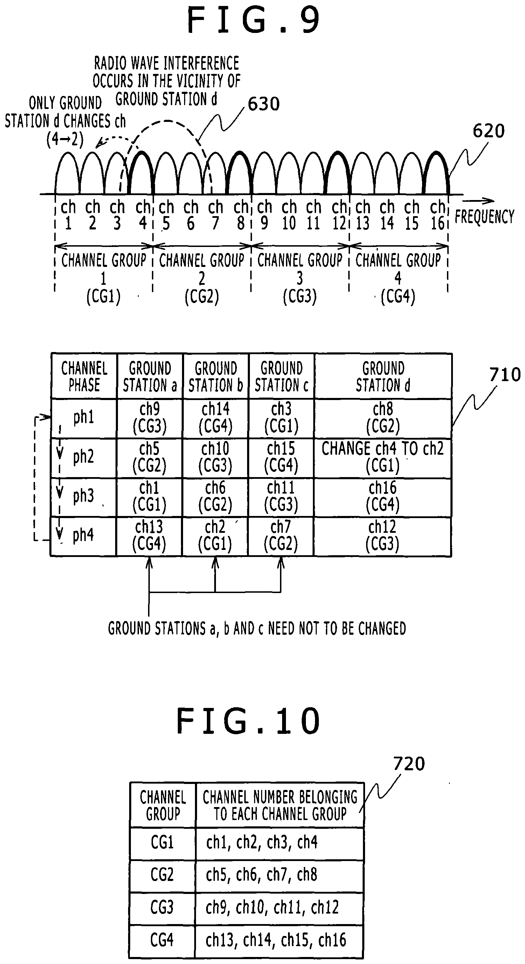

As another example of the change in channel, consider where as shown in FIG. 9, a wireless station of another wireless system is set in the vicinity of a ground station d, and radio wave interference occurs in the vicinity of ch3 to ch7 by radio waves. Further, assume that the ground stations 1 are at a distance from each other and the radio wave interference remains locally in the vicinity of the ground station d and does not influence other ground stations.

At this time, the ground station d undergoes radio wave interference from which ch4 of CG1 suffers at the timing of the channel phase ph2.

Therefore, when a deterioration in the quality of communication between the train 5 and the ground station d exceeds a threshold value, the ground station d changes the channel to another channel in CG1, e.g., ch2 in FIG. 9. Since other ground stations a, b and c do not use CG1 in the channel phase ph2, the ground station d is capable of performing a channel change within CG1 without the need to take into consideration the interference of radio waves to the channels used in other ground stations. After this channel change, the ground station d is able to avoid or reduce the influence of the radio wave interference without depending on each channel phase.

As described above, each ground station 1 needs not to consider the interference of the radio waves to the channels used in other ground stations 1 and can determine switching to a better use channel according to radio wave environments around itself.

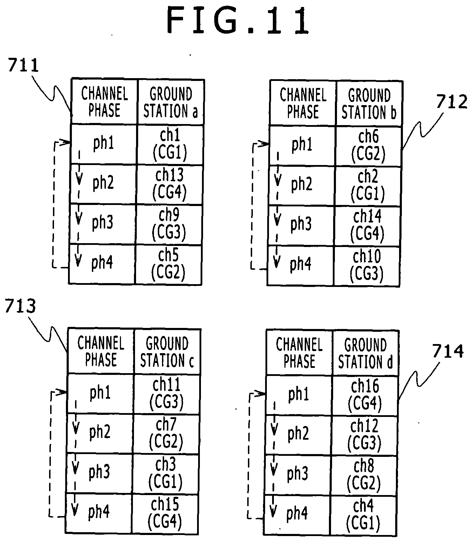

Meanwhile, as described above, each ground station 1 uses a channel group designated every channel phase, but may hold a correspondence list 720 between such channel groups and channels belonging thereto as shown in FIG. 10 and select each channel from the correspondence list 720 in accordance with a channel group instructed from the central station 100. Further, the central station 100 may hold a use channel list 710 of each ground station 1 such as shown in FIG. 7 and instruct a channel to be directly used for each ground station 1. Furthermore, each ground station 1 holds its own use channel lists 711 to 714 such as shown in FIG. 11, and the central station 100 may notify only the channel phases.

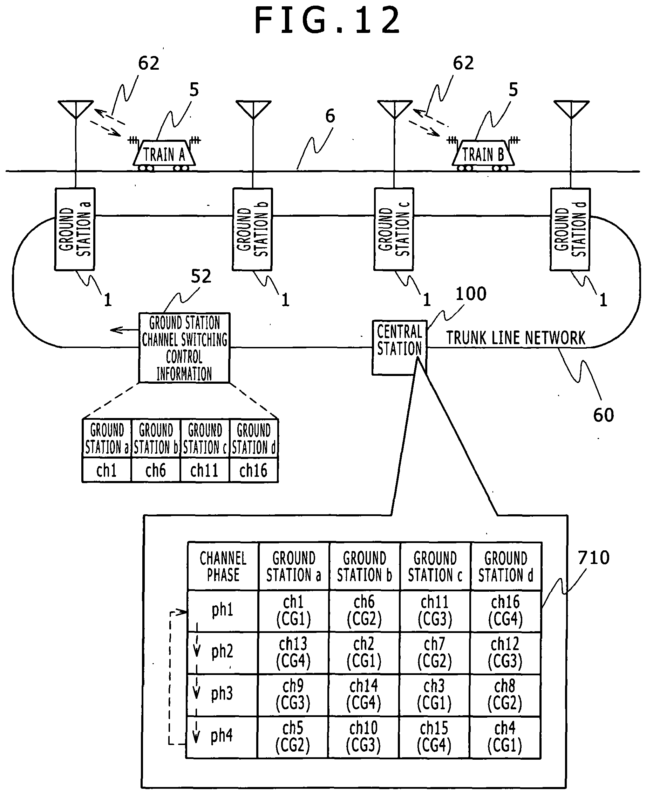

Meanwhile, as a method for allowing each ground station 1 to determine each channel phase in synchronism to thereby decide its own use channel, there are, for example, a method of determining a channel phase by synchronizing time among all ground stations 1 by means such as a GPS (Global Positioning System) or the like and determining a channel to be used, and a method of allowing the central station 100 to notify a use channel to each ground station 1 in broadcast form as mentioned above. In the present embodiment, an example of a method for allowing the central station 100 to notify a use channel to each ground station 1 will be described by way of example using each of FIGS. 12, 13 and 14.

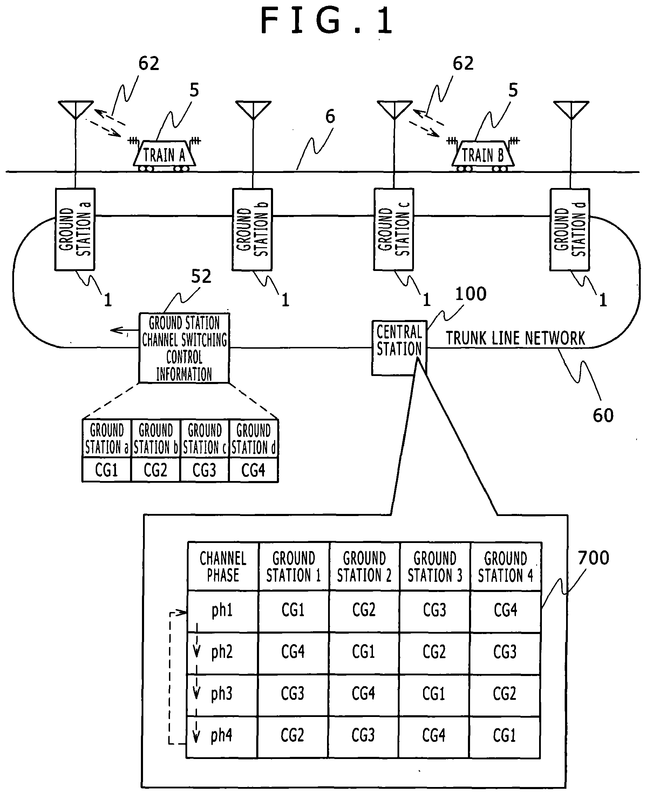

Incidentally, for simplification of the drawings, the description of the train control device 101 and the branch line network 61 is omitted in FIGS. 1, 12, 13 and 14. Further, the central station 100 and the train control device 101 may be of a type that the same device has mutual functions.

In FIG. 1, the central station 100 broadcasts ground station channel switching control information 52 descriptive of channel groups used by each ground station 1 to each ground station 1 for every constant time. Each ground station 1 detects the channel group used in itself from information described in the ground station channel switching control information 52 received therein. In FIG. 1, during a channel phase ph1, according to the ground station channel switching control information 52, a ground station a is instructed to take CG1, a ground station b is instructed to take CG2, a ground station c is instructed to take CG3, and a ground station d is instructed to take CG4. During the next channel phase ph2, the ground station a is instructed to take CG4, the ground station b is instructed to take CG1, the ground station c is instructed to take CG2, and the ground station d is instructed to take CG3. The same applies even to other channel phases.

In FIG. 1, if each ground station 1 holds the correspondence list 720 of the channel groups and the channels belonging thereto shown in FIG. 10, it is possible to determine the channel used by the ground station 1.

On the other hand, in FIG. 12, the central station 100 side determines a channel phase for each ground station 1 and a use channel corresponding to it and broadcasts ground station channel switching control information 52 descriptive of channels used by each ground station 1 to all ground stations 1 for every constant time with respect to each ground station 1. Each ground station 1 detects its own use channel from the information described in the received ground station channel switching control information 52. In FIG. 12, during the channel phase ph1, according to the ground station channel switching control information 52, the ground station a is instructed to take ch1, the ground station b is instructed to take ch6, the ground station c is instructed to take ch11, and the ground station d is instructed to take ch16. During the next channel phase ph2, the ground state a is instructed to take ch13, the ground station b is instructed to take ch2, the ground station c is instructed to take ch7, and the ground station d is instructed to take ch12. The same applies even to other channel phases.

In FIG. 12, the central station 100 holds the use channel list 710 for each station such as shown in FIG. 7. Each ground station 1 can determine a use channel as instructed from the central station 100.

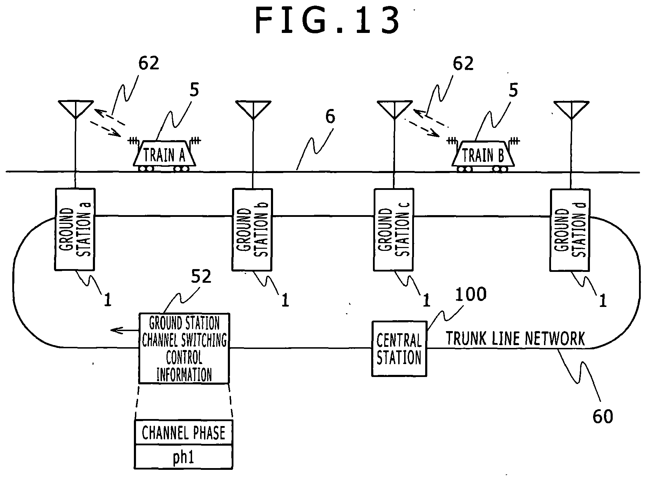

On the other hand, in FIG. 13, the central station 100 broadcasts every constant time, ground station channel switching control information 52 descriptive of information about channel phases at that time to each ground station 1. Each ground station 1 detects its own use channel group and channel from the information described in the received ground station channel switching control information 52. In FIG. 13, during a channel phase ph1, each ground station is instructed to take the channel phase ph1 according to the ground station channel switching control information 52. During the next channel phase ph2, each ground station is instructed to take the channel phase ph2. Other channel phases are similar to above.

In FIG. 13, if each ground station 1 holds its own use channel lists 711 to 714 such as shown in FIG. 11, each ground station 1 is able to determine a channel to be used.

Incidentally, as the information related to each channel phase described above, the central station 100 adds a sequence number indicative of a transmission order to the ground station channel switching control information 52, and each ground station may detect the channel phase from the sequence number. For example, when the number of channel phases is n, a number obtained by adding 1 to the remainder obtained by dividing the sequence number by n may be determined as channel phases at that time.

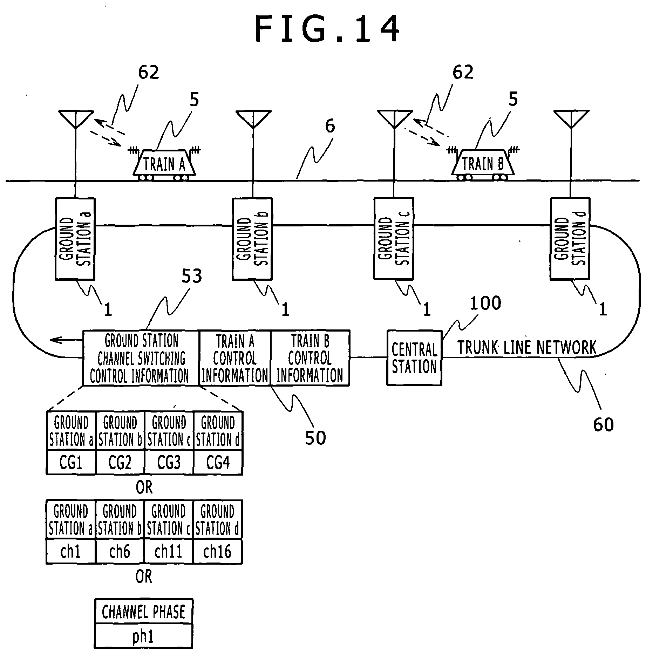

Further, FIG. 14 is an example of a method for adding the ground station channel switching control information 52 described in FIGS. 1, 12 and 13 to the train control information 50 transmitted by the train control device 101. That is, the central station 100 adds information about a use channel group of each ground station corresponding to a channel phase at the time of its relay, a use channel of each ground station, or each channel phase to the train control information 50 transmitted by the train control device 101 as ground station channel switching control information 53 and relays it to the trunk line network 60.

The information to be held in advance by the ground stations 1 receiving the above information therein is respectively similar to the examples described in FIGS. 1, 12 and 13. Further, if the sequence number indicative of the transmission order is added to the train control information 50 transmitted by the train control device 101 as the information about each channel phase described above, each ground station may detect a channel phase from the sequence number added to the train control information 50. For example, when the number of channel phases is n, a number obtained by adding 1 to the remainder obtained by dividing the sequence number by n may be determined as channel phases at that time.

Meanwhile, the time required to stay in the one channel phase described above may be, for example, an integer multiple of a period for transmitting the train control information 50 by the train control device 101 or may be a value smaller than a detection time required for a high rank system handling train control to detect a communication abnormality and thereby stop a train.

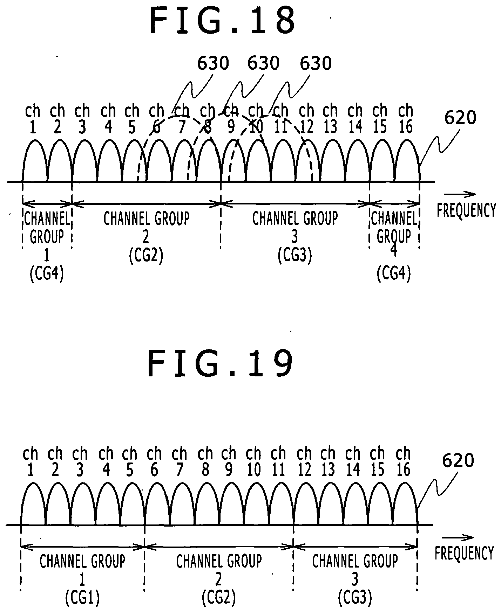

Further, in the present embodiment, the present wireless communication system has divided the available channels into the four channel groups by four channels. It is however desirable that in a wireless communication system in which the overlapping number of cells in the ground station 1 is small, the number of channel groups is reduced as much as possible, the number of channels in the same channel group is increased, and the channel number at which radio wave interference of another wireless system can be avoided, is increased. That is, when the overlapping number of cells on the travel route 6 is taken to be m at maximum, the number of channel groups is desired to be m. An example of m=3 is illustrated in FIG. 19.

The above has described the first embodiment.

In the present invention, according to the description shown above, in the wireless communication system in which the plural ground stations transmit and receive the data to and from the plural trains, each ground station is able to prevent the radio waves from interfering with each other between the ground stations by using the channel groups different between the ground stations in the period of the same channel phase, and to avoid or reduce the influence of the temporary radio wave interference from another wireless system by varying each channel phase between the ground stations in synchronism and changing the use channel for every constant time. Further, only the ground station having undergone the radio wave interference is able to avoid or reduce the influence of the continuous radio wave interference by selecting the better use channel according to the radio wave environments around itself by simply making a change to another channel in the use-permitted channel group without the need to take into consideration the use channels of other ground stations.

Accordingly, it is possible to provide the wireless communication system which reduces the influence of both the radio wave interference from other ground stations in the present wireless communication system and the radio wave interference from each wireless station in another wireless system and is high in operation rate.

### (Second embodiment)

In the above first embodiment, the channels available for the present wireless communication system have been divided into the four channel groups by four channels.

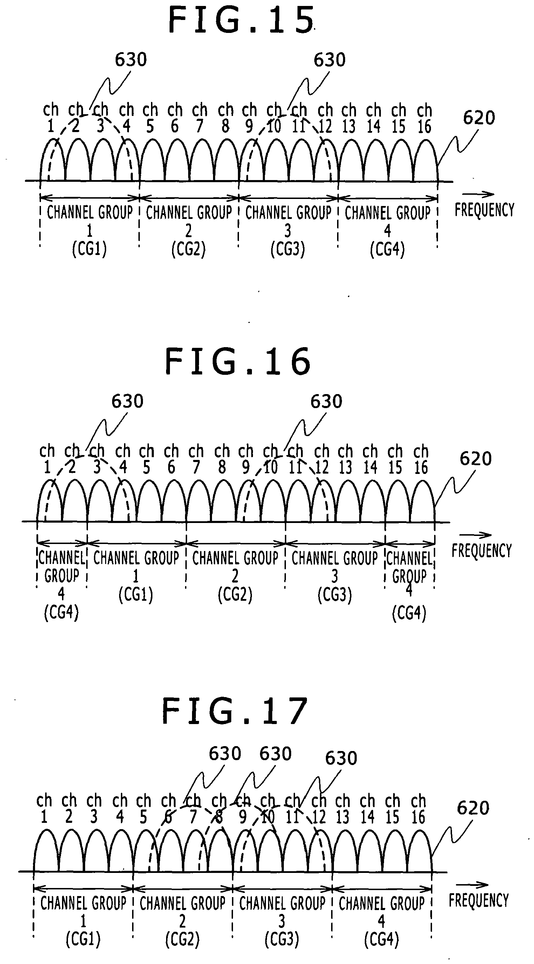

As shown in FIG. 15, however, there is a possibility that the radio waves of another wireless system will interfere over all channels in one channel group of the present wireless communication system depending on the method of dividing the channels into the channel groups. In the case of FIG. 15, for example, there is a possibility that each time the channel phases using CG1 and CG3 are reached, the ground station 1 will be unavailable due to a deterioration in communication quality.

Therefore, the central station 100 having detected such a state (a state in which a deterioration in communication quality is detected over all the channels in the same channel group) of radio wave interference is capable of changing the grouping of the channels into the channel groups to grouping by which the radio wave interference can be avoided, as shown in FIG. 16.

The changing of the grouping into the channel groups is made possible by stopping the present wireless communication system and changing the setting of the channel group of each ground station 1. However, the central station 100 notifies the correspondence list 720 of the post-change channel groups and the channels belonging thereto, and the channel phases taken as the timings provided to change the channel groups to each ground station 1 in advance to thereby make it possible to continue communications by the methods shown in FIGS. 1, 13 and 14 after the notification thereof and change the grouping of the channel groups online.

Further, since the central station 100 simply notifies the use channel to each ground station 1 in the method shown in FIG. 12 and the use channel notifying method in FIG. 14, the grouping of the channel groups may simply be changed within the central station 100. Each ground station 1 is able to continue communications even if it does not recognize the change in the grouping of the channel groups.

The above has described the second embodiment.

In the present invention, according to the description shown above, in the wireless communication system in which the plural ground stations transmit and receive the data to and from the plural trains, the influence of the radio wave interference can be avoided or reduced by changing the method for the grouping of the channel groups online even when the communication quality is deteriorated within all channels in one channel group due to the radio wave interference from another wireless system.

Accordingly, it is possible to provide a wireless communication system which reduces the influence of both the radio wave interference from other ground stations in the present wireless communication system and the radio wave interference from each wireless station in another wireless system and is high in operation rate.

### (Third embodiment)

In the above first embodiment, the channels available for the present wireless communication system have been equally divided into the four channel groups by four channels.

There is however a case where the use of other wireless systems is concentrated on a band within a limited range depending on a frequency band to be used.

For example, as shown in FIG. 17, when radio interference waves from other wireless systems tend to unevenly exist in bands of CG2 and CG3, all channels have potential for becoming unavailable even in both CG2 and CG3 due to a deterioration in communication quality.

Therefore, as shown in FIG. 18, for example, a channel-group grouping method can be changed in such a manner that the number of channels belonging to CG2 and CG3 is increased to be 6 channels and instead the number of channels belonging to CG1 and CG4 is decreased to be 2 channels and that the avoidance of radio wave interference becomes easy in CG2 and CG3.

That is, the number of channels allowed to belong to the channel groups can be changed according to the frequency of the radio wave interference.

Even in this case, the channel-group grouping method can be changed online by a method similar to the second embodiment.

The above has described the third embodiment.

According to the description shown above, in the present invention, when the radio wave interference from another wireless system tends to unevenly exist in one specific band in the wireless communication system in which the plural ground stations transmit and receive the data to and from the plural trains, the number of the channels belonging to the channel groups is changed according to the frequency of the radio wave interference, and the channel-group grouping method is changed online, thereby making it possible to avoid or reduce the influence of the radio wave interference.

Accordingly, it is possible to provide a wireless communication system which reduces the influence of both of radio wave interference from another ground station in the present wireless communication system and radio wave interference from a wireless station of another wireless system and is high in operation rate.

Incidentally, although all the embodiments described above have been described in such a manner that the central station 100 performs notification of the use channel group list 700, the use channel lists 710, 711, 712, 713 and 714 and the channel group correspondence table 720 to each ground station 1 and notification of the change in the channel group and the change in the use channel to each ground station 1, a maintenance dedicated terminal may be connected to the trunk line network 60 to notify them from the maintenance dedicated terminal to each ground station 1.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications within the ambit of the appended claims.

## Claims

1. A wireless communication system comprising:
a plurality of master stations (1);
slave stations (5) that communicate with the master stations (1); and
a central station (100) that instructs frequencies used in the master stations (1),
wherein each of the master stations (1) has a plurality of frequencies changed at constant time intervals,
each of the master stations (1) selects a frequency to use out of the frequencies not overlapping with the frequency used in another master station (1) in the same synchronized period, from among the plurality of frequencies, and
when communication quality of the selected frequency to use is lower than a predetermined threshold value, each of the master stations (1) switches the frequency to one of the other frequencies from within the plurality of frequencies included in the own station, or
wherein the central station (100) assigns the plurality of frequencies changed at the constant time intervals to each of the master stations (1),
the central station (100) instructs a frequency to use in each of the master stations (1) from among the plurality of assigned frequencies which is not used by the other master stations (1) in the same synchronized period, and
the central station (100) instructs, among the plurality of master stations (1), the master station (1) at which communication quality of a frequency to use is lower than a predetermined threshold value to switch the frequency to one of the other frequencies from within the plurality of frequencies assigned to the master station (1) in question.

2. The wireless communication system according to claim 1,
wherein each of the master stations (1) is assigned with frequency groups respectively comprising a plurality of different frequencies,
the frequency groups assigned to each of the master stations (1) are respectively changed at constant time intervals, and
each of the master stations (1) determines a frequency to use out of the assigned frequency groups.

3. The wireless communication system according to claim 2,
wherein the number of the frequency groups is greater than or equal to the number of the master stations (1) with which the slave stations (5) are communicable simultaneously.

4. The wireless communication system according to claim 2,
wherein each of the frequency groups determines the number of frequencies constituting the same, based on the frequency of radio wave interference experienced by the wireless communication system.

5. The wireless communication system according to claim 1,
wherein the communication quality is at least any of a received packet error rate, a bit error rate, a power ratio of a desired signal to an interference signal, a lost number of packets per unit time, a received number of effective packets per unit time, and an effective packet average reception interval.

6. The wireless communication system according to claim 2,
wherein when, within the frequencies constituting the frequency groups, the frequencies at each of which a deterioration in communication quality is detected reach a fixed number or more, the constitution of the frequencies of each of the frequency groups is changed and assigned to the master station (1) of which the frequency groups are to be changed.

7. The wireless communication system according to claim 2,
wherein when a device constituting the wireless communication system, and a maintenance dedicated terminal managing a network are connected to the wireless communication system, and a deterioration in communication quality is detected a fixed number or more within a plurality of frequencies belonging to the frequency groups, the maintenance dedicated terminal changes the frequencies belonging to the frequency groups and notifies the change to the master station (1) of which the frequency groups are to be changed.

8. The wireless communication system according to claims 1 to 7,
wherein the slave stations (5) are a plurality of mobiles moved on a predetermined route, and
wherein the master stations (1) are a plurality of ground stations installed along the predetermined route.

9. The wireless communication system according to claim 8,
wherein the slave stations (5) are a plurality of trains moved on a predetermined route, and
wherein the central station (100) and the trains perform transmission/reception of at least control information about running of the trains and state information about an operation state of the device through the ground stations.

## Patentansprüche

1. Drahtloses Kommunikationssystem umfassend:
mehrere Master-Stationen (1);
Slave-Stationen (5), die mit den Master-Stationen (1) kommunizieren; und
eine zentrale Station (100), die Frequenzen vorgibt, die in den Master-Stationen (1) verwendet werden,
wobei jede der Master-Stationen (1) eine Mehrzahl von Frequenzen hat, die in konstanten Zeitintervallen geändert werden,
wobei jede der Master-Stationen (1) zur Nutzung eine Frequenz aus denjenigen Frequenzen aus der Mehrzahl von Frequenzen auswählt, die nicht mit den im gleichen Synchronisations-Zeitintervall in einer anderen Master-Station (1) verwendeten Frequenzen überlappen, und
wenn die Kommunikationsqualität der gewählten Frequenz niedriger als ein vorbestimmter Schwellenwert ist, jede der Master-Stationen (1) die Frequenz auf eine andere der Frequenzen aus der Mehrzahl von Frequenzen, die dieser Station zugeordnet sind, umschaltet, oder
wobei die zentrale Station (100) die Mehrzahl von Frequenzen,
die jeder der Master-Stationen (1) zugewiesen werden, in konstanten Zeitintervallen ändert,
die zentrale Station (100) jeder der Master-Stationen (1) zur Verwendung eine Frequenz aus der Mehrzahl von zugeordneten Frequenzen zuweist, die im gleichen Synchronisations-Zeitintervall nicht in einer anderen Master-Station (1) verwendetet wird, und
die zentrale Station (100) diejenige Master-Station (1) aus der Mehrzahl von Master-Stationen (1), bei welcher die Kommunikationsqualität einer verwendeten Frequenz niedriger als ein vorbestimmter Schwellwert ist, anweist, die Frequenz auf eine andere Frequenz aus der Mehrzahl der der betreffenden Master-Station (1) zugeordneten Frequenzen umzuschalten.

2. Drahtloses Kommunikationssystem nach Anspruch 1,
wobei jeder der Master-Stationen (1) Frequenzgruppen zugeordnet sind, die jeweils eine Mehrzahl von verschiedenen Frequenzen umfassen,
die jeder der Master-Stationen (1) zugeordneten Frequenzgruppen jeweils in konstanten Zeitintervallen geändert werden, und
jede der Master-Stationen (1) eine Frequenz aus den zugeordneten Frequenzgruppen auswählt, die verwendet werden soll.

3. Drahtloses Kommunikationssystem nach Anspruch 2,
wobei die Anzahl der Frequenzgruppen größer oder gleich der Anzahl der Master-Stationen (1) ist, mit denen die Slave-Stationen (5) gleichzeitig kommunizieren können.

4. Drahtloses Kommunikationssystem nach Anspruch 2,
wobei jede der Frequenzgruppen die Anzahl der in ihr enthaltenen Frequenzen abhängig von der Häufigkeit der in dem drahtlosen Kommunikationssystem auftretenden Funkwelleninterferenzen bestimmt.

5. Drahtloses Kommunikationssystem nach Anspruch 1,
wobei die Kommunikationsqualität zumindest eines ist aus einer Fehlerrate empfangener Pakete, einer Bitfehlerrate, einem Leistungsverhältnis eines gewünschten Signals zu einem Interferenzsignal, einer Anzahl von verlorenen Paketen pro Zeiteinheit, einer Anzahl von empfangenen effektiven Paketen pro Zeiteinheit und einem effektiven Paket-Durchschnitts-Empfangsintervall.

6. Drahtloses Kommunikationssystem nach Anspruch 2,
wobei dann, wenn aus den die Frequenzgruppen bildenden Frequenzen die Frequenzen, für welche eine Verschlechterung der Kommunikationsqualität detektiert wurde, eine vorgegebene Zahl oder mehr erreichen, die Zusammensetzung der Frequenzen der Frequenzgruppen geändert wird und derjenigen Master-Station (1) zugewiesen wird, deren Frequenzgruppen geändert werden müssen.

7. Drahtloses Kommunikationssystem nach Anspruch 2,
wobei dann, wenn ein das drahtlose Kommunikationssystem bildendes Gerät und ein für die Wartung vorgesehenes Terminal zum Verwalten des Netzwerks mit dem drahtlosen Kommunikationssystem verbunden sind und eine Verschlechterung der Kommunikationsqualität für eine vorgegebene Anzahl oder mehr aus einer Mehrzahl von Frequenzen, die zu den Frequenzgruppen gehören, detektiert wurde, das für die Wartung vorgesehene Terminal die zu den Frequenzgruppen gehörenden Frequenzen verändert und die Master-Station (1), deren Frequenzgruppen geändert werden sollen, über die Änderung unterrichtet.

8. Drahtloses Kommunikationssystem nach einem der Ansprüche 1 bis 7,
wobei die Slave-Stationen (5) eine Mehrzahl von Mobilgeräten sind, die entlang einer vorgegebenen Route bewegt werden, und wobei die Master-Stationen (1) eine Mehrzahl von Bodenstationen sind, die entlang der vorgegebenen Route installiert sind.

9. Drahtloses Kommunikationssystem nach Anspruch 8,
wobei die Slave-Stationen (5) eine Mehrzahl von Zügen sind, die auf einer vorgegebenen Strecke bewegt werden, und
wobei die zentrale Station (100) und die Züge über die Bodenstationen zumindest Steuerungsinformationen, die die Fahrt der Züge betreffen, sowie Zustandsinformationen, welche den Betriebszustand der Geräte betreffen, senden / empfangen.

## Revendications

1. Système de communication sans fil comprenant :
une pluralité de stations maîtresses (1) ;
des stations esclaves (5) qui communiquent avec les stations maîtresses (1) ; et
une station centrale (100) qui indique les fréquences utilisées dans les stations maîtresses (1) ;
dans lequel chacune des stations maîtresses (1) présente une pluralité de fréquences qui sont modifiées à des intervalles de temps constants ;
chacune des stations maîtresses (1) sélectionne une fréquence à utiliser parmi les fréquences qui ne se chevauchent pas avec la fréquence utilisée dans une autre station maîtresse (1) au cours de la même période synchronisée, parmi la pluralité de fréquences ; et
lorsque la qualité de communication de la fréquence sélectionnée à utiliser est inférieure à une valeur de seuil prédéterminée, chacune des stations maîtresses (1) bascule la fréquence sur l'une des autres fréquences au sein de la pluralité de fréquences incluse dans la propre station ; ou
dans lequel la station centrale (100) affecte la pluralité de fréquences modifiées, aux intervalles de temps constants, à chacune des stations maîtresses (1) ;
la station centrale (100) indique une fréquence à utiliser dans chacune des stations maîtresses (1) parmi la pluralité de fréquences affectées, laquelle n'est pas utilisée par les autres stations maîtresses (1) au cours de la même période synchronisée ; et
la station centrale (100) indique, parmi la pluralité de stations maîtresses (1), la station maîtresse (1) pour laquelle la qualité de communication d'une fréquence à utiliser est inférieure à une valeur de seuil prédéterminée pour basculer la fréquence sur l'une des autres fréquences au sein de la pluralité de fréquences affectées à la station maîtresse (1) en question.

2. Système de communication sans fil selon la revendication 1,
dans lequel chacune des stations maîtresses (1) se voit affecter des groupes de fréquences comprenant respectivement une pluralité de fréquences différentes ;
les groupes de fréquences affectés à chacune des stations maîtresses (1) sont modifiés, respectivement, à des intervalles de temps constants ; et
chacune des stations maîtresses (1) détermine une fréquence à utiliser parmi les groupes de fréquences affectés.

3. Système de communication sans fil selon la revendication 2,
dans lequel le nombre des groupes de fréquences est supérieur ou égal au nombre des stations maîtresses (1) pour lesquelles les stations esclaves (5) peuvent être communiquées simultanément.

4. Système de communication sans fil selon la revendication 2,
dans lequel chacun des groupes de fréquences détermine le nombre de fréquences constituant ledit groupe, sur la base de la fréquence de brouillage d'onde radio rencontrée par le système de communication sans fil.

5. Système de communication sans fil selon la revendication 1,
dans lequel la qualité de communication correspond à au moins l'un quelconque parmi un taux d'erreurs sur les paquets reçus, un taux d'erreurs sur les bits, un rapport de puissance d'un signal souhaité sur un signal de brouillage, un nombre de paquets perdus par unité de temps, un nombre de paquets effectifs reçus par unité de temps et un intervalle de réception moyen des paquets effectifs.

6. Système de communication sans fil selon la revendication 2,
dans lequel, lorsque, dans les fréquences constituant les groupes de fréquences, les fréquences à chacune desquelles est détectée une détérioration en termes de qualité de communication atteignent un nombre fixe ou un nombre supérieur, la constitution des fréquences de chacun des groupes de fréquences est modifiée et affectée à la station maîtresse (1) dont les groupes de fréquences doivent être modifiés.

7. Système de communication sans fil selon la revendication 2,
dans lequel, lorsqu'un dispositif constituant le système de communication sans fil, et un terminal dédié à la maintenance qui gère un réseau, sont connectés au système de communication sans fil, et lorsqu'une détérioration en termes de qualité de communication est détectée un nombre de fois fixe ou plus au sein d'une pluralité de fréquences appartenant aux groupes de fréquences, le terminal dédié à la maintenance modifie les fréquences appartenant aux groupes de fréquences et notifie la modification à la station maîtresse (1) dont les groupes de fréquences doivent être modifiés.

8. Système de communication sans fil selon les revendications 1 à 7,
dans lequel les stations esclaves (5) correspondent à une pluralité de stations mobiles circulant sur un itinéraire prédéterminé ; et
dans lequel les stations maîtresses (1) correspondent à une pluralité de stations au sol installées le long de l'itinéraire prédéterminé.

9. Système de communication sans fil selon la revendication 8,
dans lequel les stations esclaves (5) correspondent à une pluralité des trains circulant sur un itinéraire prédéterminé ; et
dans lequel la station centrale (100) et les trains mettent en oeuvre une émission/réception d'au moins des informations de commande sur le fonctionnement des trains et des informations d'état sur un état de fonctionnement du dispositif à travers les stations au sol.
